# FASCICULE DE BREVET EUROPEEN

(11) **EP 4 476 806 B1**
(45) Date de publication et mention de la délivrance du brevet: **22.10.2025**
(21) Numéro de dépôt: 23706419.1
(22) Date de dépôt: 01.02.2023
(51) Int. Cl.: H02J 7/00

(54) **UNITÉ DE COMMANDE DE LA PUISSANCE D'AU MOINS UNE BATTERIE, AÉRONEF COMPRENANT LADITE UNITÉ DE COMMANDE ET PROCÉDÉ DE COMMANDE CORRESPONDANT**
STEUEREINHEIT ZUR STEUERUNG DER LEISTUNG VON MINDESTENS EINER BATTERIE, FLUGZEUG MIT DER STEUEREINHEIT UND ZUGEHÖRIGES STEUERVERFAHREN
CONTROL UNIT FOR CONTROLLING THE POWER OF AT LEAST ONE BATTERY, AIRCRAFT COMPRISING SAID CONTROL UNIT, AND CORRESPONDING CONTROL METHOD

(30) Priorité: 07.02.2022 FR 2201055
(43) Date de publication de la demande: 18.12.2024
(73) Titulaire: Safran Electrical & Power, 31702 Blagnac Cedex (FR)
(72) Inventeur: BAQUE, Franck, 77550 Moissy Cramayel (FR); CORNU, Quentin, 77550 Moissy Cramayel (FR); GUERIN, Fabrice, 77550 Moissy Cramayel (FR); PERCHERON, Guillaume, 77550 Moissy Cramayel (FR); RENOTTE, Alexis, 77550 Moissy Cramayel (FR)
(74) Mandataire: Casalonga
(86) Numéro de dépôt international: PCT/FR2023/050132
(87) Numéro de publication internationale: WO 2023/148451

(56) Documents cités:
- US-A- 5 894 415
- US-A1- 2017 285 109
- US-A1- 2019 097 453
- US-B2- 10 518 725

## Description

### Domaine technique

L'invention a pour domaine technique la protection électrique des réseaux d'alimentation d'aéronef, et plus particulièrement, la protection de réseaux d'alimentation en haute tension continue.

### Techniques antérieures

Les réseaux électriques à bord d'un aéronef comprennent généralement soit la combinaison d'un réseau de tension alternative (115Vac ou 230Vac) et d'un réseau basse tension continu (28Vdc), soit un unique réseau de tension continue (28Vdc). Des exemples de ces réseaux sont US2017285109 et US2019097453.

Les aéronefs opérant via un réseau alternatif ont une puissance électrique embarquée totale comprise entre 50 à 500 kW (voire 1MW) tandis que les réseaux purement continus basse tension (acronyme BT) présentent des puissances embarquées plus limitées et inférieures à 100kW.

A ce jour il n'existe pas de réseau pour aéronef en haute tension continue. De ce fait, il n'existe pas de composants permettant d'opérer à une tension de 800 VDC, et à des puissances de l'ordre de 100 à 250 kW. De tels réseaux seraient avantageux pour des aéronefs à propulsion électrique.

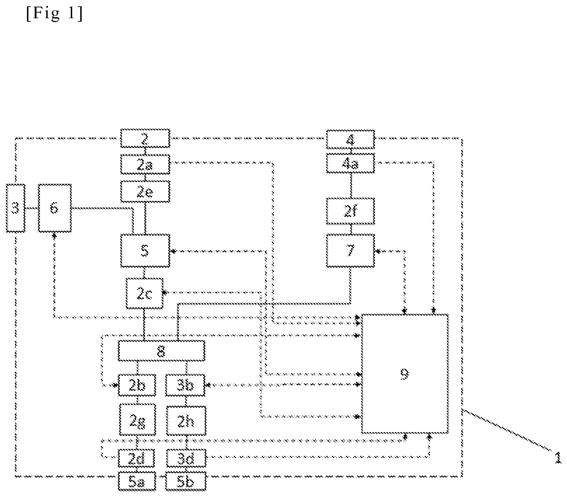

L'évolution vers un réseau d'alimentation à haute tension continue d'une part et vers des sources d'énergie électrique constituées de batteries d'autre part, rend les solutions traditionnelles de protection (principalement de type I²t figure 1) inutilisables. En effet, les profils de courants transitoires sont différents en haute tension continue de ceux rencontrés en haute tension alternative. Les niveaux d'énergie et les dynamiques associées sont totalement différents de ceux rencontrés dans des réseaux à haute tension alternative.

La stratégie d'action de protection et de sélectivité de type I²t bien adaptée à une machine tournante n'est alors plus pertinente. De plus, le dimensionnement de cette protection pour des réseaux alternatifs est réalisé en fonction des conducteurs du réseau d'alimentation et du bobinage de la machine tournante. Les sources de nature capacitive rendent inadapté un tel dimensionnement de la protection de type I²t.

Les sources capacitives, telles que des batteries de forte puissance, peuvent être soumises à des incidents inconnus des machines tournantes, entrainant un emballement thermique ou des courants de court-circuit de très forte puissance.

Lors d'un échauffement excessif de la batterie au-delà d'une certaine température, la batterie est soumise à un phénomène d'emballement thermique, pouvant provoquer à terme une surpression et un dégagement gazeux. Cet échauffement peut être causé par un courant excessif, lorsque la batterie est en surcharge ou qu'elle subit un court-circuit.

Les courants de court-circuit développés par de telles batteries (notamment de technologie Li-Ion) peuvent atteindre des valeurs de plusieurs milliers d'ampères à l'issue d'une montée très rapide peu de temps après l'établissement du court-circuit. Il est alors difficile d'interrompre des courants aussi élevés présentant un temps de montée très court, dans un encombrement et une masse raisonnable et compatible avec un aéronef.

L'invention a ainsi pour but de répondre aux déficiences de l'état de l'art et en particulier aux limitations identifiées ci-dessus, concernant la protection de réseaux électriques à haute tension continue pour aéronef.

De l'état de la technique antérieure, on connait les documents suivants.

Le document EP 3 703 220 A1 décrit la régulation de la tension délivrée par un redresseur actif afin de pouvoir le connecter à une batterie.

Le document EP 3 588 729 B1, le document EP 2 980 946 B1 et le document FR 3 050 882 décrivent des réseaux électriques classiques, qui visent à alimenter le réseau de bord d'un aéronef.

Le document WO 2020/174165 A1 et le document FR 3 098 663 décrivent l'architecture d'un système de propulsion électrique, mais reste silencieux sur les boitiers de protection et distribution.

Le document EP 3 683 911 A1 décrit une méthode de protection contre les défauts appliqué aux réseaux haute tension continue HVDC interconnectés.

Aucun de ces documents ne résout le problème technique identifié plus haut.

### Exposé de l'invention

L'invention est définie par les revendications indépendantes et a pour objet une unité de commande de la puissance d'une batterie comprenant au moins deux connexions entrantes portant une tension continue et deux connexions sortantes délivrant une tension continue, une première connexion entrante étant connectée à un premier capteur de courant et à une barre de puissance haute tension par l'intermédiaire d'un organe de protection, la barre de puissance à haute tension étant connectée à une première connexion sortante par l'intermédiaire d'un premier fusible commandé et d'un deuxième capteur de courant et à une deuxième connexion sortante par l'intermédiaire d'un deuxième fusible commandé et d'un troisième capteur de courant, l'unité de commande comprenant par ailleurs un moyen de commande configuré pour commuter au moins l'un parmi l'organe de protection, le premier fusible commandé et le deuxième fusible commandé en fonction des mesures reçues du premier capteur de courant, du deuxième capteur de courant ou du troisième capteur de courant de sorte à isoler un défaut électrique dans l'unité de commande, l'une au moins des connexions entrantes ou l'une au moins des connexions sortantes.

L'unité de commande peut comprendre un premier contacteur et une deuxième connexion entrante, le premier contacteur étant connecté d'une part au premier capteur de courant et d'autre part à l'organe de protection, la deuxième connexion entrante étant connectée au premier contacteur par l'intermédiaire d'un deuxième contacteur connecté au moyen de commande.

L'unité de commande peut comprendre une troisième connexion entrante connectée à un troisième contacteur par l'intermédiaire d'un quatrième capteur de courant, le troisième contacteur étant connecté à la barre de puissance à haute tension, le troisième contacteur et le quatrième capteur de courant étant connectés au moyen de commande.

Une barre de puissance secondaire peut être disposée entre un capteur de courant et le contacteur correspondant ou le fusible commandé correspondant.

L'invention a également pour objet un aéronef muni d'une batterie et de deux moteurs électriques, comprenant une unité de commande de la puissance d'une batterie tel que décrit ci-dessus, dans lequel la première connexion entrante est connectée à la batterie, la première connexion sortante étant connectée au premier moteur électrique, la deuxième connexion sortante étant connectée au deuxième moteur électrique.

L'aéronef peut comprendre une alimentation de secours et/ou étant connecté à un moyen de recharge stationnaire, dans lequel la deuxième connexion entrante est connectée au moyen de recharge stationnaire et la troisième connexion entrante est connectée à l'alimentation de secours.

L'aéronef peut comprendre deux unités de commande de puissance d'une batterie connectées en parallèle par l'intermédiaire de leurs troisièmes connexions entrantes.

L'aéronef peut comprendre deux unités de commande de puissance d'une batterie connectées en parallèle par leur deuxième connexion entrante, chaque unité de commande de puissance d'une batterie comprenant une liaison entre leur barre de puissance à haute tension et la première connexion sortante et la deuxième connexion sortante de l'autre unité de commande de puissance d'une batterie, chaque liaison étant munie d'un deuxième organe de protection commandé par le moyen de commande.

L'invention a enfin pour objet un procédé de commande d'une unité de commande de la puissance électrique disposée dans un aéronef tel que décrit ci-dessus, le procédé de commande comprenant les étapes suivantes :
- pour alimenter le moteur électrique par l'intermédiaire de la batterie, on commande le premier contacteur de sorte qu'il soit rendu passant tandis que l'on commande le deuxième contacteur et le troisième contacteur de sorte qu'ils soient rendus non passants,
- pour alimenter le moteur électrique par l'intermédiaire de l'alimentation de secours, on commande le troisième contacteur de sorte qu'il soit rendu passant tandis que l'on commande le premier contacteur et le deuxième contacteur de sorte qu'ils soient rendus non passants, et
- pour charger la batterie par le groupe de puissance auxiliaire, on commande le deuxième contacteur de sorte qu'il soit rendu passant tandis que l'on commande le premier contacteur et le troisième contacteur de sorte qu'ils soient rendus non passants.

Lorsque l'on détecte un défaut sur l'alimentation d'un moteur électrique ou groupe de moteur électrique alimentés par l'une des connexions sortantes par l'intermédiaire de l'organe de protection, on peut réaliser les étapes suivantes :
- on commande l'ouverture de l'organe de protection afin d'interrompre le courant circulant depuis la batterie, empêcher l'établissement d'un courant de court-circuit et éviter l'emballement thermique de la batterie,
- on émet un message de défaut depuis l'organe de protection à destination du moyen de commande,
- on émet une commande d'ouverture depuis le moyen de commande vers le premier contacteur afin d'isoler physiquement la batterie,
- on détermine la localisation du défaut en fonction des mesures du premier capteur de courant, du deuxième capteur de courant, du troisième capteur de courant et du quatrième capteur de courant par l'intermédiaire du moyen de commande,
- on émet une commande d'activation depuis le moyen de commande vers le premier fusible commandé,
- après le déclenchement du premier fusible commandé, on émet une commande de fermeture depuis le moyen de commande vers le premier contacteur et vers l'organe de protection afin de rétablir l'alimentation de l'autre moteur électrique.

Lorsque l'on détecte un défaut sur la barre de puissance à haute tension, on peut réaliser les étapes suivantes :
- on commande l'ouverture de l'organe de protection afin d'interrompre le courant circulant depuis la batterie, empêcher l'établissement d'un courant de court-circuit et éviter l'emballement thermique de la batterie,
- on émet un message de défaut depuis l'organe de protection à destination du moyen de commande,
- on émet une commande d'ouverture depuis le moyen de commande vers le premier contacteur afin d'isoler physiquement la batterie,
- on compare les mesures du premier capteur de courant, du deuxième capteur de courant, du troisième capteur de courant et du quatrième capteur de courant par l'intermédiaire du moyen de commande, et
- on émet un message d'information de défaut d'alimentation en fonction du résultat de la comparaison.

Lorsque l'on détecte un défaut sur la batterie par l'intermédiaire du moyen de commande en fonction des mesures du premier capteur de courant et/ou de l'organe de protection, on peut réaliser les étapes suivantes :
- on émet une commande d'ouverture depuis le moyen de commande vers le premier contacteur afin d'isoler physiquement la batterie,
- on émet une commande d'ouverture depuis le moyen de commande vers l'organe de protection,
- on émet une commande de fermeture depuis le moyen de commande vers le troisième contacteur afin de rétablir l'alimentation des moteurs électriques,
- on initie une séquence de pré-charge sur l'alimentation de secours afin de charger les capacités des moteurs électriques, et
- une fois les capacités chargées, on active la ligne principale.

Lorsque l'on détecte un défaut sur l'alimentation de secours par l'intermédiaire du moyen de commande en fonction des mesures du quatrième capteur de courant, on peut réaliser les étapes suivantes :
- on émet une commande d'ouverture depuis le moyen de commande vers le troisième contacteur afin d'isoler physiquement l'alimentation de secours, et
- on émet une information de défaut de redondance de l'alimentation depuis le moyen de commande.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'une unité de commande de la puissance d'une batterie selon l'invention,
- la figure 2 illustre les principales étapes d'un procédé de commande d'une telle unité de commande, et
- la figure 3 illustre les principaux éléments d'un mode de réalisation alternatif d'une unité de commande de la puissance d'une batterie selon l'invention.

### Description détaillée

Afin de résoudre le problème technique, une unité de commande de la puissance d'une batterie BPMU (acronyme anglophone pour « Battery Power Management Unit ») est proposée. L'unité de commande de la puissance d'une batterie BPMU est référencée 1 sur la figure 1.

L'unité de commande de la puissance d'une batterie 1 comprend trois connexions 2,3,4 entrantes portant une tension continue et deux connexions 5a,5b sortantes délivrant une tension continue également.

Une première connexion entrante 2 peut être connectée à une batterie.

Une deuxième connexion entrante 3 peut être connectée à un moyen de recharge stationnaire, tel qu'une unité de puissance auxiliaire APU (acronyme anglophone pour « Auxiliary Power Unit »).

Une troisième connexion entrante 4 peut être connectée à une alimentation de secours.

Une première connexion 5a sortante peut être connectée à un premier moteur électrique ou groupe de moteurs électriques.

Une deuxième connexion 5b sortante peut être connectée à un deuxième moteur électrique ou groupe de moteurs électriques.

La première connexion entrante 2 est connectée à un premier capteur de courant 2a connecté lui-même à un premier contacteur 5. La sortie du premier contacteur 5 est connectée à une barre de puissance haute tension 8 par l'intermédiaire d'un organe de protection 2c SSPC (acronyme pour « Solid State Power Controller »). L'organe de protection 2c est configuré pour limiter le courant circulant à travers ses bornes et pour permettre une précharge lors de l'arrivée de puissance. Lors de la fermeture de l'organe de protection, la différence de potentiel (batterie haute tension en amont et tension nulle en aval) engendre un courant proche des niveaux de courant de court-circuit. Afin d'éviter cela, l'organe de protection 2c est équipé d'une limitation en courant permettant une montée en tension progressive et ainsi éviter l'établissement d'un courant de court-circuit.

La deuxième connexion entrante 3 est connectée à un deuxième contacteur 6, connecté lui-même en entrée du premier contacteur 5 en parallèle du premier capteur de courant 2a.

La barre de puissance à haute tension 8 est connectée en sortie à la première connexion 5a sortante à un premier moteur électrique par l'intermédiaire d'un premier fusible commandé 2b et d'un deuxième capteur 2d et à la deuxième connexion 5b sortante par l'intermédiaire d'un deuxième fusible commandé 3b et d'un troisième capteur 3d.

Le premier fusible commandé 2b et le deuxième fusible commandé 3b permettent d'isoler respectivement le premier moteur électrique et le deuxième moteur électrique en cas de défaut de distribution.

La troisième connexion entrante 4 est connectée à un quatrième capteur de courant 4a connecté lui-même à un troisième contacteur 7. La sortie du troisième contacteur 7 est connectée à la barre de puissance à haute tension 8.

Le premier capteur de courant 2a, le deuxième capteur de courant 2d, le troisième capteur de courant 3d et le quatrième capteur de courant 4a sont aptes à mesurer de courant circulant entre leurs bornes.

Le deuxième capteur de courant 2d, le troisième capteur de courant 3d et le quatrième capteur de courant 4a sont en plus aptes à détecter la formation d'arc électriques séries et/ou parallèles.

L'unité de commande de la puissance d'une batterie 1 comprend également un moyen de commande 9 configuré pour commander le premier contacteur 5, le deuxième contacteur 6 et le troisième contacteur 7, l'organe de protection 2c SSPC, le premier fusible commandé 2b et le deuxième fusible commandé 3b en fonction des mesures reçues des capteurs de courant 2a,4a,2d,3d et de l'état de l'organe de protection 2c SSPC.

Dans un mode de réalisation particulier, l'unité de commande de la puissance d'une batterie BPMU comprend des barres de puissance secondaires 2e,2f,2g,2h en sortie du premier capteur 2a, du deuxième capteur 2d et en entrée du troisième capteur 3d et du quatrième capteur4a. Ces barres de puissance secondaires 2e,2f,2g,2h permettent de connecter en parallèle plusieurs éléments alimentant (batteries, alimentations de secours) ou plusieurs éléments alimentés (plusieurs moteurs électriques) en multipliant les différentes connexions.

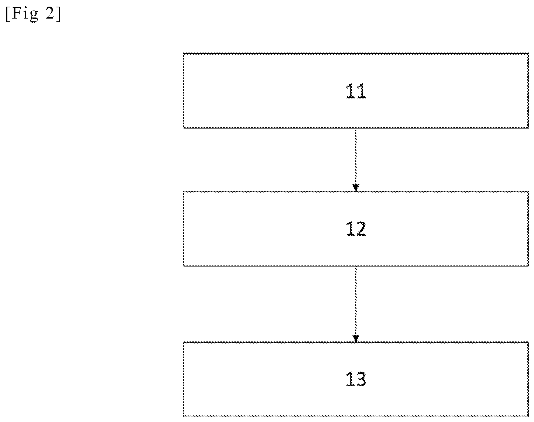

Les principales étapes de procédé de commande selon l'invention vont maintenant être décrites, et sont illustrées par la figure 2.

Pour alimenter le moteur électrique par l'intermédiaire de la batterie, lors d'une première étape 11, le premier contacteur 5 est rendu passant tandis que le deuxième contacteur 6 et le troisième contacteur 7 sont rendus non passants.

Pour alimenter le moteur électrique par l'intermédiaire de l'alimentation de secours, lors d'une deuxième étape 12, le troisième contacteur 7 est rendu passant tandis que le premier contacteur 5 et le deuxième contacteur 6 sont rendus non passants.

Pour charger la batterie par le groupe de puissance auxiliaire, lors d'une troisième étape 13, le deuxième contacteur 6 est rendu passant tandis que le premier contacteur 5 et le troisième contacteur 7 sont rendus non passants.

Le procédé de commande comprend également des étapes lors de l'apparition d'un défaut sur l'alimentation des moteurs électriques, tel qu'un court-circuit ou une surtension).

Au cours d'une première sous-étape, on détecte un défaut par l'intermédiaire de l'organe de protection 2c SSPC et on commande l'ouverture de l'organe de protection 2c SSPC afin d'interrompre le courant circulant depuis la batterie, empêcher l'établissement d'un courant de court-circuit et éviter l'emballement thermique de la batterie. On émet un message de défaut depuis l'organe de protection 2c SSPC à destination du moyen de commande 9.

Au cours d'une deuxième sous-étape, on émet une commande d'ouverture depuis le moyen de commande 9 vers le premier contacteur 5 afin d'isoler physiquement la batterie.

Au cours d'une troisième sous-étape, on détermine la localisation du défaut en fonction des mesures du premier capteur de courant 2a, du deuxième capteur de courant 2d, du troisième capteur de courant 3d et du quatrième capteur de courant 4a par l'intermédiaire du moyen de commande 9.

Au cours d'une quatrième sous-étape, on émet une commande d'activation depuis le moyen de commande 9 vers le premier fusible commandé 2b. L'analyse et la comparaison des courants via les capteurs de courant 2d, 3d et 2a permettent d'identifier la localisation du défaut entraînant un court-circuit. Le moyen de commande 9 actionne alors l'élément de commutation le plus proche du défaut.

Au cours d'une cinquième sous-étape, après le déclenchement du premier fusible commandé 2b, on émet une commande de fermeture depuis le moyen de commande 9 vers le premier contacteur 5 et vers l'organe de protection 2c SSPC afin de rétablir l'alimentation de l'autre moteur électrique.

Le procédé de commande comprend également des étapes lors de l'apparition d'un défaut, tel qu'un court-circuit ou une surtension sur la barre de puissance 8.

Au cours d'une première sous-étape, on détecte un défaut par l'intermédiaire de l'organe de protection 2c SSPC et on commande l'ouverture de l'organe de protection 2c SSPC afin d'interrompre le courant circulant depuis la batterie, empêcher l'établissement d'un courant de court-circuit et éviter l'emballement thermique de la batterie. On émet un message de défaut depuis l'organe de protection 2c SSPC à destination du moyen de commande 9.

Au cours d'une deuxième sous-étape, on émet une commande d'ouverture depuis le moyen de commande 9 vers le premier contacteur 5 afin d'isoler physiquement la batterie.

Au cours d'une troisième sous-étape, on compare les mesures du premier capteur de courant 2a, du deuxième capteur de courant 2d, du troisième capteur de courant 3d et du quatrième capteur de courant 4a par l'intermédiaire du moyen de commande 9, afin de déterminer la localisation du défaut. La comparaison des mesures ne permettant pas de déterminer la localisation du défaut, on considère que le défaut se situe au niveau de la barre de puissance 8.

Au cours d'une quatrième sous-étape, on émet un message d'information de défaut d'alimentation.

Le procédé de commande comprend également des étapes lors de l'apparition d'un défaut, tel qu'un court-circuit ou une surtension sur la batterie.

Au cours d'une première sous-étape, on détecte un défaut sur la batterie par l'intermédiaire du moyen de commande 9 en fonction des mesures du premier capteur de courant 2a et/ou de l'organe de protection 2c SSPC. Une telle erreur est caractérisée, par exemple, par un courant nul.

Au cours d'une deuxième sous-étape, on émet une commande d'ouverture depuis le moyen de commande 9 vers le premier contacteur 5 afin d'isoler physiquement la batterie et on émet une commande d'ouverture depuis le moyen de commande 9 vers l'organe de protection 2c SSPC.

Au cours d'une troisième sous-étape, on émet une commande de fermeture depuis le moyen de commande 9 vers le troisième contacteur 7 afin de rétablir l'alimentation des moteurs électriques.

Au cours d'une quatrième sous-étape, on initie une séquence de pré-charge sur l'alimentation de secours afin de charger les capacités des moteurs électriques. Une fois les capacités chargées, on active la ligne principale . Afin de garantir la qualité du réseau électrique, des capacités sont placés à différents endroits de l'unité de commande de la puissance d'une batterie (moteur électrique, en sortie de l'organe de protection SSPC 2c). Afin d'éviter une connexion brutale de ces capacités sur la tension de la batterie de secours lors de la commutation de l'organe 7, une séquence de précharge (qui limite le courant transitant dans l'organe de commutation 7) est activée et permet d'augmenter la tension desdites capacités afin d'égaliser les tensions en amont et en aval. Une fois les tensions amont et aval égales, la séquence de précharge est terminée et la ligne principale permettant de fournir la puissance nécessaire au moteur est activée.

Le procédé de commande comprend également des étapes lors de l'apparition d'un défaut, tel qu'un court-circuit ou une surtension) sur l'alimentation de secours.

Au cours d'une première sous-étape, on détecte un défaut sur l'alimentation de secours par l'intermédiaire du moyen de commande 9 en fonction des mesures du quatrième capteur de courant 4a. Une telle erreur est caractérisée par exemple, par un courant nul.

Au cours d'une deuxième sous-étape, on émet une commande d'ouverture depuis le moyen de commande 9 vers le troisième contacteur 7 afin d'isoler physiquement l'alimentation de secours.

Au cours d'une troisième sous-étape, on émet une information de défaut de redondance de l'alimentation depuis le moyen de commande 9.

L'unité de commande de la puissance d'une batterie BPMU et le procédé de commande correspondant permettent de détecter, protéger et isoler les défauts pouvant se produire dans l'unité de commande de la puissance d'une batterie BPMU ou en périphérie pour éviter d'une part leur propagation et, d'autre part, pour assurer une continuité de fonctionnement de l'alimentation du ou des moteurs.

Les éléments de détection et de commutation choisis permettent de protéger des défauts électriques sans reposer sur des méthodes classiques de type I²t qui ne permettent pas de protéger efficacement un réseau alimenté par des batteries en haute tension continue.

Dans un mode de réalisation particulier, deux unités de commande de la puissance d'une batterie BPMU peuvent être combinées ensemble par l'intermédiaire de leur alimentation de secours de sorte à augmenter le nombre de moteurs électriques alimentés. Plus précisément, l'alimentation de secours d'une première unité de commande de la puissance d'une batterie BPMU 1a est reliée à l'alimentation de secours d'une deuxième l'unité de commande de la puissance d'une batterie BPMU 1b. En cas de défaut de la batterie alimentant l'une ou l'autre des unités de commande de la puissance d'une batterie BPMU, une redondance d'alimentation peut être réalisée par l'autre unité de commande de la puissance d'une batterie BPMU.

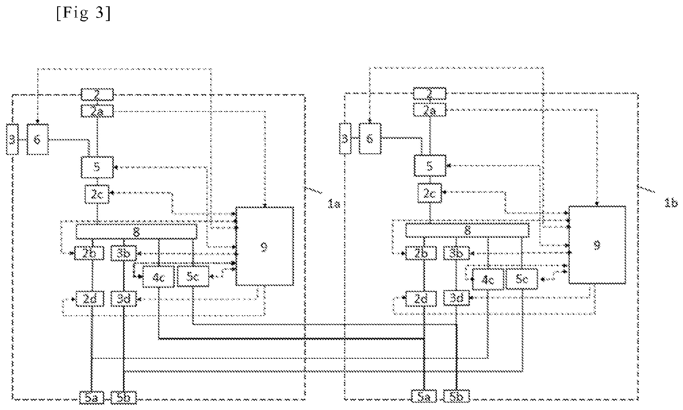

Dans un autre mode de réalisation illustré par la figure 3, deux unités de commande de la puissance d'une batterie BPMU 1a,1b sont combinées ensemble par l'intermédiaire de leur alimentation de secours de sorte à augmenter le nombre de moteurs électriques alimentés. Néanmoins, à la différence des unités de commande de la puissance d'une batterie BPMU selon les autres modes de réalisation, l'alimentation de secours d'une unité de commande de la puissance d'une batterie BPMU 1a,1b est connectée en aval du bus à haute tension 8, les alimentations de secours d'une unité de commande de la puissance d'une batterie BPMU étant directement connectées aux moteurs électriques alimentés par l'autre unité de commande de la puissance d'une batterie BPMU de sorte à pouvoir les alimenter en cas de défaut. Chaque alimentation d'un moteur électrique est alors munie d'un deuxième organe de protection SSPC 4c,5c commandé par le moyen de commande 9.

Par ailleurs, la batterie alimentant chaque unité de commande de la puissance d'une batterie BPMU peut être connectée en parallèle à chaque unité de commande de la puissance d'une batterie BPMU de sorte à pouvoir contribuer à l'alimentation des moteurs électriques en cas de défaut interne d'une unité de commande de la puissance d'une batterie BPMU.

## Revendications

1. Aéronef muni d'une batterie et de deux moteurs électriques, comprenant une unité de commande de la puissance d'une batterie (1) comprenant au moins deux connexions entrantes (2,3) portant une tension continue et deux connexions (5a,5b) sortantes délivrant une tension continue, une première connexion (2) entrante étant connectée à un premier capteur de courant (2a) et à une barre de puissance haute tension (8) par l'intermédiaire d'un organe de protection (2c), la barre de puissance à haute tension étant connectée à une première connexion sortante (5a) par l'intermédiaire d'un premier fusible commandé (2b) et d'un deuxième capteur de courant (2d), et à une deuxième connexion sortante (5b) par l'intermédiaire d'un deuxième fusible commandé (3b) et d'un troisième capteur de courant (3d), la première connexion entrante (2) étant connectée à la batterie (1), la première connexion sortante (5a) étant connectée à un premier moteur électrique, la deuxième connexion sortante (5b) étant connectée à un deuxième moteur électrique, l'unité de commande comprenant par ailleurs un moyen de commande (9) configuré pour commuter au moins l'un parmi l'organe de protection (2c), le premier fusible commandé (2b) et le deuxième fusible commandé (3b) en fonction des mesures reçues du premier capteur de courant (2a), du deuxième capteur de courant (2d) ou du troisième capteur de courant (3d) de sorte à isoler un défaut électrique dans l'unité de commande, l'une au moins des connexions entrantes ou l'une au moins des connexions sortantes , l'unité de commande comprenant un premier contacteur (5) connecté d'une part au premier capteur de courant (2a) et d'autre part à l'organe de protection (2c), la deuxième connexion (3) entrante étant connectée au premier contacteur (5) par l'intermédiaire d'un deuxième contacteur (6) connecté au moyen de commande (9), l'unité de commande comprenant une troisième connexion (4) entrante connectée à un troisième contacteur (7) par l'intermédiaire d'un quatrième capteur de courant (4a), le troisième contacteur (7) étant connecté à la barre de puissance à haute tension (8), le troisième contacteur (7) et le quatrième capteur de courant (4a) étant connectés au moyen de commande (9).

2. Aéronef selon la revendication 1, dans lequel l'unité de commande comprend une barre de puissance secondaire (2e,2f,2g,2h) disposée entre un capteur de courant (2a,4a,2d,3d) et le contacteur correspondant (5,6) ou le fusible commandé (2b,3b) correspondant..

3. Aéronef selon l'une quelconque des revendications 1 ou 2, comprenant une alimentation de secours et/ou étant connecté à un moyen de recharge stationnaire, dans lequel la deuxième connexion entrante (3) est connectée au moyen de recharge stationnaire et la troisième connexion entrante (4) est connectée à l'alimentation de secours.

4. Aéronef selon la revendication 3, comprenant deux unités de commande de puissance d'une batterie (1a,1b) connectées en parallèle par l'intermédiaire de leurs troisièmes connexions entrantes (4).

5. Aéronef selon la revendication 3, comprenant deux unités de commande de puissance d'une batterie (1a,1b) connectées en parallèle par leur deuxième connexion entrante (3), chaque unité de commande de puissance d'une batterie (1a,1b) comprenant une liaison entre leur barre de puissance à haute tension (8) et la première connexion sortante et la deuxième connexion sortante de l'autre unité de commande de puissance d'une batterie (1b,1a), chaque liaison étant munie d'un deuxième organe de protection (4c,5c) commandé par le moyen de commande (9).

6. Procédé de commande d'une unité de commande de la puissance électrique (1) disposée dans un aéronef selon l'une quelconque des revendications 1 à 5, le procédé de commande comprenant les étapes suivantes :
• pour alimenter le moteur électrique par l'intermédiaire de la batterie, on commande le premier contacteur (5) de sorte qu'il soit rendu passant tandis que l'on commande le deuxième contacteur (6) et le troisième contacteur (7) de sorte qu'ils soient rendus non passants,
• pour alimenter le moteur électrique par l'intermédiaire de l'alimentation de secours, on commande le troisième contacteur (7) de sorte qu'il soit rendu passant tandis que l'on commande le premier contacteur (5) et le deuxième contacteur (6) de sorte qu'ils soient rendus non passants, et
• pour charger la batterie par le groupe de puissance auxiliaire, on commande le deuxième contacteur (6) de sorte qu'il soit rendu passant tandis que l'on commande le premier contacteur (5) et le troisième contacteur (7) de sorte qu'ils soient rendus non passants.

7. Procédé de commande selon la revendication 6, dans lequel, lorsque l'on détecte un défaut sur l'alimentation d'un moteur électrique ou groupe de moteur électrique alimentés par l'une des connexions sortantes (5a,5b) par l'intermédiaire de l'organe de protection (2c), on réalise les étapes suivantes :
• on commande l'ouverture de l'organe de protection (2c) afin d'interrompre le courant circulant depuis la batterie, empêcher l'établissement d'un courant de court-circuit et éviter l'emballement thermique de la batterie,
• on émet un message de défaut depuis l'organe de protection (2c) à destination du moyen de commande (9),
• on émet une commande d'ouverture depuis le moyen de commande (9) vers le premier contacteur (5) afin d'isoler physiquement la batterie,
• on détermine la localisation du défaut en fonction des mesures du premier capteur de courant (2a), du deuxième capteur de courant (2d), du troisième capteur de courant (3d) et du quatrième capteur de courant (4a) par l'intermédiaire du moyen de commande (9),
• on émet une commande d'activation depuis le moyen de commande (9) vers le premier fusible commandé (2b),
• après le déclenchement du premier fusible commandé (2b), on émet une commande de fermeture depuis le moyen de commande (9) vers le premier contacteur (5) et vers l'organe de protection (2c) afin de rétablir l'alimentation de l'autre moteur électrique.

8. Procédé de commande selon l'une quelconque des revendications 6 ou 7, dans lequel, lorsque l'on on détecte un défaut sur la barre de puissance à haute tension (8), on réalise les étapes suivantes :
• on commande l'ouverture de l'organe de protection (2c) afin d'interrompre le courant circulant depuis la batterie, empêcher l'établissement d'un courant de court-circuit et éviter l'emballement thermique de la batterie,
• on émet un message de défaut depuis l'organe de protection (2c) à destination du moyen de commande (9),
• on émet une commande d'ouverture depuis le moyen de commande (9) vers le premier contacteur (5) afin d'isoler physiquement la batterie,
• on compare les mesures du premier capteur de courant (2a), du deuxième capteur de courant (2d), du troisième capteur de courant (3d) et du quatrième capteur de courant (4a) par l'intermédiaire du moyen de commande (9), et
• on émet un message d'information de défaut d'alimentation en fonction du résultat de la comparaison.

9. Procédé de commande selon l'une quelconque des revendications 6 à 8, dans lequel, lorsque l'on détecte un défaut sur la batterie par l'intermédiaire du moyen de commande (9) en fonction des mesures du premier capteur de courant (2a) et/ou de l'organe de protection (2c), on réalise les étapes suivantes :
• on émet une commande d'ouverture depuis le moyen de commande (9) vers le premier contacteur (5) afin d'isoler physiquement la batterie,
• on émet une commande d'ouverture depuis le moyen de commande (9) vers l'organe de protection (2c),
• on émet une commande de fermeture depuis le moyen de commande (9) vers le troisième contacteur (7) afin de rétablir l'alimentation des moteurs électriques,
• on initie une séquence de pré-charge sur l'alimentation de secours afin de charger les capacités des moteurs électriques, et
• une fois les capacités chargées, on active la ligne principale.

10. Procédé de commande selon l'une quelconque des revendications 6 à 9, dans lequel, lorsque l'on détecte un défaut sur l'alimentation de secours par l'intermédiaire du moyen de commande (9) en fonction des mesures du quatrième capteur de courant (4a), on réalise les étapes suivantes :
• on émet une commande d'ouverture depuis le moyen de commande (9) vers le troisième contacteur (7) afin d'isoler physiquement l'alimentation de secours, et
• on émet une information de défaut de redondance de l'alimentation depuis le moyen de commande (9).

## Patentansprüche

1. Luftfahrzeug, das mit einer Batterie und mit zwei Elektromotoren versehen ist, umfassend eine Leistungssteuereinheit einer Batterie (1), die mindestens zwei eingehende Verbindungen (2, 3), die eine Gleichspannung führen, und zwei ausgehende Verbindungen (5a, 5b), die eine Gleichspannung liefern, umfasst, wobei eine erste eingehende Verbindung (2) über ein Schutzorgan (2c) mit einem ersten Stromsensor (2a) und einer Hochspannungsstromschiene (8) verbunden ist, wobei die Hochspannungsstromschiene über eine erste gesteuerte Sicherung (2b) und einen zweiten Stromsensor (2d) mit einer ersten ausgehenden Verbindung (5a) und über eine zweite gesteuerte Sicherung (3b) und einen dritten Stromsensor (3d) mit einer zweiten ausgehenden Verbindung (5b) verbunden ist, wobei die erste eingehende Verbindung (2) mit der Batterie (1) verbunden ist, wobei die erste ausgehende Verbindung (5a) mit einem ersten Elektromotor verbunden ist, wobei die zweite ausgehende Verbindung (5b) mit einem zweiten Elektromotor verbunden ist, wobei die Steuereinheit weiter ein Steuermittel (9) umfasst, das konfiguriert ist, um mindestens eines von dem Schutzorgan (2c), der ersten gesteuerten Sicherung (2b) und der zweiten gesteuerten Sicherung (3b) in Abhängigkeit von den Messungen zu schalten, die von dem ersten Stromsensor (2a), dem zweiten Stromsensor (2d) oder dem dritten Stromsensor (3d) empfangen werden, um einen elektrischen Fehler in der Steuereinheit, in mindestens einer der eingehenden Verbindungen oder mindestens einer der ausgehenden Verbindungen zu isolieren, wobei die Steuereinheit einen ersten Schütz (5) umfasst, der einerseits mit dem ersten Stromsensor (2a) und andererseits mit dem Schutzorgan (2c) verbunden ist, wobei die zweite eingehende Verbindung (3) über einen zweiten Schütz (6), der mit dem Steuermittel (9) verbunden ist, mit dem ersten Schütz (5) verbunden ist, wobei die Steuereinheit eine dritte eingehende Verbindung (4) umfasst, die über einen vierten Stromsensor (4a) mit einem dritten Schütz (7) verbunden ist, wobei der dritte Schütz (7) mit der Hochspannungsstromschiene (8) verbunden ist, wobei der dritte Schütz (7) und der vierte Stromsensor (4a) mit dem Steuermittel (9) verbunden sind.

2. Luftfahrzeug nach Anspruch 1, wobei die Steuereinheit eine Sekundärstromschiene (2e, 2f, 2g, 2h) umfasst, die zwischen einem Stromsensor (2a, 4a, 2d, 3d) und dem entsprechenden Schütz (5, 6) oder der entsprechenden gesteuerten Sicherung (2b, 3b) angeordnet ist.

3. Luftfahrzeug nach einem der Ansprüche 1 oder 2, das eine Notstromversorgung umfasst und/oder mit einem stationären Lademittel verbunden ist, wobei die zweite eingehende Verbindung (3) mit dem stationären Lademittel verbunden ist und die dritte eingehende Verbindung (4) mit der Notstromversorgung verbunden ist.

4. Luftfahrzeug nach Anspruch 3, das zwei Leistungssteuereinheiten einer Batterie (1a, 1b) umfasst, die über ihre dritten eingehenden Verbindungen (4) parallel verbunden sind.

5. Luftfahrzeug nach Anspruch 3, das zwei Leistungssteuereinheiten einer Batterie (1a, 1b) umfasst, die über ihre zweite eingehende Verbindung (3) parallel verbunden sind, wobei jede Leistungssteuereinheit einer Batterie (la,lb) eine Anbindung zwischen ihrer Hochspannungsstromschiene (8) und der ersten ausgehenden Verbindung und der zweiten ausgehenden Verbindung der anderen Leistungssteuereinheit einer Batterie (1b, 1a) umfasst, wobei jede Anbindung mit einem zweiten Schutzorgan (4c,5c), das durch das Steuermittel (9) gesteuert wird, versehen ist.

6. Verfahren zum Steuern einer in einem Luftfahrzeug angeordneten elektrischen Leistungssteuereinheit (1) nach einem der Ansprüche 1 bis 5, wobei das Steuerverfahren die folgenden Schritte umfasst:
• zum Versorgen des Elektromotors mit Strom über die Batterie, Steuern des ersten Schützes (5), sodass er durchgeschaltet wird, während der zweite Schalter (6) und der dritte Schütz (7) gesteuert werden, sodass sie nicht durchgeschaltet werden,
• zum Versorgen des Elektromotors mit Strom über die Notstromversorgung, Steuern des dritten Schützes (7), sodass er durchgeschaltet wird, während der erste Schütz (5) und der zweite Schütz (6) gesteuert werden, sodass sie nicht durchgeschaltet werden, und
• zum Laden der Batterie durch das Hilfsstromaggregat, Steuern des zweiten Schützes (6), sodass er durchgeschaltet wird, während der erste Schütz (5) und der dritte Schütz (7) gesteuert werden, sodass sie nicht durchgeschaltet werden.

7. Verfahren zum Steuern nach Anspruch 6, wobei, wenn ein Fehler in der Versorgung eines Elektromotors oder einer Elektromotorgruppe, die von einer der ausgehenden Verbindungen (5a, 5b) über das Schutzorgan (2c) versorgt werden, erkannt wird, die folgenden Schritte durchgeführt werden:
• Steuern des Öffnens des Schutzorgans (2c), um den von der Batterie fließenden Strom zu unterbrechen, den Aufbau eines Kurzschlussstroms zu verhindern und ein thermisches Durchgehen der Batterie zu vermeiden,
• Senden einer Fehlermeldung vom Schutzorgan (2c) an das Steuermittel (9),
• Senden eines Öffnungsbefehls vom Steuermittel (9) an den ersten Schütz (5), um die Batterie physisch zu isolieren,
• Bestimmen der Stelle des Fehlers in Abhängigkeit von den Messungen des ersten Stromsensors (2a), des zweiten Stromsensors (2d), des dritten Stromsensors (3d) und des vierten Stromsensors (4a) über das Steuermittel (9),
• Senden eines Aktivierungsbefehls vom Steuermittel (9) an die erste gesteuerte Sicherung (2b),
• nach dem Auslösen der ersten gesteuerten Sicherung (2b), Senden eines Schließbefehls vom Steuermittel (9) an den ersten Schütz (5) und das Schutzorgan (2c), um die Stromversorgung des anderen Elektromotors wiederherzustellen.

8. Verfahren zum Steuern nach einem der Ansprüche 6 oder 7, wobei, wenn ein Fehler an der Hochspannungsstromschiene (8) erkannt wird, die folgenden Schritte durchgeführt werden:
• Steuern des Öffnens des Schutzorgans (2c), um den von der Batterie fließenden Strom zu unterbrechen, den Aufbau eines Kurzschlussstroms zu verhindern und ein thermisches Durchgehen der Batterie zu vermeiden,
• Senden einer Fehlermeldung vom Schutzorgan (2c) an das Steuermittel (9),
• Senden eines Öffnungsbefehls vom Steuermittel (9) an den ersten Schütz (5), um die Batterie physisch zu isolieren,
• Vergleichen der Messungen des ersten Stromsensors (2a), des zweiten Stromsensors (2d), des dritten Stromsensors (3d) und des vierten Stromsensors (4a) über das Steuermittel (9), und
• Senden einer Informationsmeldung über einen Versorgungsfehler in Abhängigkeit von dem Ergebnis des Vergleichs.

9. Verfahren zum Steuern nach einem der Ansprüche 6 bis 8, wobei, wenn ein Fehler an der Batterie über das Steuermittel (9) in Abhängigkeit von den Messungen des ersten Stromsensors (2a) und/oder des Schutzorgans (2c) erkannt wird, die folgenden Schritte durchgeführt werden:
• Senden eines Öffnungsbefehls vom Steuermittel (9) an den ersten Schütz (5), um die Batterie physisch zu isolieren,
• Senden eines Öffnungsbefehls vom Steuermittel (9) an das Schutzorgan (2c),
• Senden eines Schließbefehls vom Steuermittel (9) an den dritten Schalter (7), um die Stromversorgung der Elektromotoren wiederherzustellen,
• Einleiten einer Vorladesequenz an der Notstromversorgung, um die Kapazitäten der Elektromotoren zu laden, und
• sobald die Kapazitäten geladen sind, Aktivieren der Hauptleitung.

10. Verfahren zum Steuern nach einem der Ansprüche 6 bis 9, wobei, wenn ein Fehler in der Notstromversorgung über das Steuermittel (9) in Abhängigkeit von den Messungen des vierten Stromsensors (4a) erkannt wird, die folgenden Schritte durchgeführt werden:
• Senden eines Öffnungsbefehls vom Steuermittel (9) an den dritten Schütz (7), um die Notstromversorgung physisch zu isolieren, und
• Senden einer Information über einen Redundanzfehler der Versorgung vom Steuermittel (9) aus.

## Claims

1. Aircraft provided with a battery and two electric motors, comprising a battery power control unit (1) comprising at least two incoming connections (2, 3) carrying a DC voltage and two outgoing connections (5a, 5b) delivering a DC voltage, a first incoming connection (2) being connected to a first current sensor (2a) and to a high-voltage busbar (8) via a protection member (2c), the high-voltage busbar being connected to a first outgoing connection (5a) via a first controlled fuse (2b) and a second current sensor (2d), and to a second outgoing connection (5b) via a second controlled fuse (3b) and a third current sensor (3d), the first incoming connection (2) being connected to the battery (1), the first outgoing connection (5a) being connected to a first electric motor, the second outgoing connection (5b) being connected to a second electric motor, the control unit further comprising a control means (9) designed to switch at least one out of the protection member (2c), the first controlled fuse (2b) and the second controlled fuse (3b) based on measurements received from the first current sensor (2a), the second current sensor (2d) or the third current sensor (3d) so as to isolate an electrical fault in the control unit, at least one of the incoming connections or at least one of the outgoing connections, the control unit comprising a first contactor (5) connected on the one hand to the first current sensor (2a) and on the other hand to the protection member (2c), the second incoming connection (3) being connected to the first contactor (5) via a second contactor (6) connected to the control means (9), the control unit comprising a third incoming connection (4) connected to a third contactor (7) via a fourth current sensor (4a), the third contactor (7) being connected to the high-voltage busbar (8), the third contactor (7) and the fourth current sensor (4a) being connected to the control means (9).

2. Aircraft according to Claim 1, wherein the control unit comprises a secondary busbar (2e, 2f, 2g, 2h) arranged between a current sensor (2a, 4a, 2d, 3d) and the corresponding contactor (5, 6) or the corresponding controlled fuse (2b, 3b).

3. Aircraft according to either one of Claims 1 or 2, comprising an emergency power supply and/or being connected to a stationary recharging means, wherein the second incoming connection (3) is connected to the stationary recharging means and the third incoming connection (4) is connected to the emergency power supply.

4. Aircraft according to Claim 3, comprising two battery power control units (1a, 1b) connected in parallel via their third incoming connections (4).

5. Aircraft according to Claim 3, comprising two battery power control units (1a, 1b) connected in parallel by their second incoming connection (3), each battery power control unit (1a, 1b) comprising a link between their high-voltage busbar (8) and the first outgoing connection and the second outgoing connection of the other battery power control unit (1b, 1a), each link being provided with a second protection member (4c, 5c) controlled by the control means (9).

6. Control method for an electrical power control unit (1) arranged in an aircraft according to one of Claims 1 to 5, the control method comprising the following steps:
• to power the electric motor via the battery, the first contactor (5) is controlled so that it is made conductive while the second contactor (6) and the third contactor (7) are controlled so that they are made non-conductive,
• to power the electric motor via the emergency power supply, the third contactor (7) is controlled so that it is made conductive while the first contactor (5) and the second contactor (6) are controlled so that they are made non-conductive, and
• to charge the battery via the auxiliary power unit, the second contactor (6) is controlled so that it is made conductive while the first contactor (5) and the third contactor (7) are controlled so that they are made non-conductive.

7. Control method according to Claim 6, wherein, when a fault is detected in the power supply to an electric motor or group of electric motors supplied by one of the outgoing connections (5a, 5b) via the protection member (2c), the following steps are carried out:
• the protection member (2c) is commanded to open in order to interrupt the current flowing from the battery, prevent the establishment of a short-circuit current and avoid thermal runaway of the battery,
• a fault message is sent from the protection member (2c) to the control means (9),
• an opening command is sent from the control means (9) to the first contactor (5) in order to physically isolate the battery,
• the location of the fault is determined based on measurements from the first current sensor (2a), the second current sensor (2d), the third current sensor (3d) and the fourth current sensor (4a) via the control means (9),
• an activation command is sent from the control means (9) to the first controlled fuse (2b),
• after the first controlled fuse (2b) has tripped, a close command is sent from the control means (9) to the first contactor (5) and to the protection member (2c) in order to restore power to the other electric motor.

8. Control method according to either one of Claims 6 or 7, wherein, when a fault is detected in the high-voltage busbar (8), the following steps are carried out:
• the protection member (2c) is commanded to open in order to interrupt the current flowing from the battery, prevent the establishment of a short-circuit current and avoid thermal runaway of the battery,
• a fault message is sent from the protection member (2c) to the control means (9),
• an opening command is sent from the control means (9) to the first contactor (5) in order to physically isolate the battery,
• the measurements are compared from the first current sensor (2a), the second current sensor (2d), the third current sensor (3d) and the fourth current sensor (4a) via the control means (9), and
• a power supply fault information message is sent depending on the result of the comparison.

9. Control method according to one of Claims 6 to 8, wherein, when a fault is detected in the battery via the control means (9) based on the measurements from the first current sensor (2a) and/or the protection member (2c), the following steps are carried out:
• an opening command is sent from the control means (9) to the first contactor (5) in order to physically isolate the battery,
• an opening command is sent from the control means (9) to the protection member (2c),
• a close command is sent from the control means (9) to the third contactor (7) in order to restore power to the electric motors,
• a pre-charge sequence is initiated on the emergency power supply in order to charge the capacitors of the electric motors, and
• once the capacitors have been charged, the main line is activated.

10. Control method according to one of Claims 6 to 9, wherein, when a fault is detected in the emergency power supply via the control means (9) based on the measurements from the fourth current sensor (4a), the following steps are carried out:
• an opening command is sent from the control means (9) to the third contactor (7) in order to physically isolate the emergency power supply, and
• a power supply redundancy fault notification is sent from the control means (9).
